# EUROPÄISCHE PATENTANMELDUNG

(11) **EP 2 230 362 A2**
(43) Veröffentlichungstag der Anmeldung: **22.09.2010**
(21) Anmeldenummer: 10002340.7
(22) Anmeldetag: 06.03.2010
(51) Int. Cl.: E04D 13/18, F24J 2/00, H01L 31/048

(54) **Abdeckelement**

(30) Priorität: 21.03.2009 DE 102009014323
(71) Anmelder: Hadwiger, Ulf Peter, 65510 Idstein / Heftrich (DE)
(72) Erfinder: Hadwiger, Ulf Peter, 65510 Idstein / Heftrich (DE)
(74) Vertreter: Nestler, Jan Hendrik

(57) **Zusammenfassung**

Die Erfindung betrifft ein Abdeckelement (1, 33) für ein Abdecksystem (19), bei dem eine Fläche (28) durch eine Mehrzahl von einzelnen Abdeckelementen (1, 33) und/oder Basis-Abdeckelementen (30) abgedeckt wird. Dabei erweist ein einzelnes Abdeckelement (1, 33) einen Abdeckumriss auf, der dem Abdeckumriss eines einzelnen Basis-Abdeckelements (30) und/oder dem Abdeckumriss einer Mehrzahl in Abdeckanordnung angeordneter Basis-Abdeckelemente (30) entspricht. Das Abdeckelement (1, 33) weist zumindest eine Lichtempfangseinrichtung (6, 34) und bevorzugt eine Heat-Pipe-Einrichtung (31) auf.

## Beschreibung

Die Erfindung betrifft ein Abdeckelement für ein Abdecksystem, bei dem eine Fläche durch eine Mehrzahl von einzelnen Abdeckelementen und/oder Basisabdeckelementen abgedeckt wird, wobei ein einzelnes Abdeckelement einen Abdeckumriss aufweist, welcher dem Abdeckumriss eines einzelnen Basisabdeckelements und/oder dem Abdeckumriss einer Mehrzahl in Abdeckordnung angeordneter Basisabdeckelemente entspricht. Weiterhin betrifft die Erfindung ein derartiges Abdecksystem.

Aus umweltpolitischen, ökologischen und zunehmend auch ökonomischen Gründen werden in zunehmendem Ausmaß Anlagen realisiert, welche die Energie des Sonnenlichts aufnehmen und für unterschiedlichste Aufgaben nutzen. Beispielsweise existieren sogenannte thermische Solargeneratoren, bei welchen die Energie des Sonnenlichts dazu genutzt wird, um Wasser zu erwärmen. Dieses Wasser kann anschließend zu Heizzwecken genutzt werden, ober aber auch zur Versorgung eines Wasserhahns mit warmem Wasser dienen. Weiterhin existieren sogenannte photovoltaische Systeme, bei denen die Energie des Sonnenlichts direkt in elektrische Energie umgewandelt wird. Die elektrische Energie wiederum kann zu unterschiedlichsten Zwecken verwendet werden. Auch eine Zwischenspeicherung in Batterien und/oder eine Einspeisung in das Stromnetz ist denkbar.

Als besonders zweckmäßig erweist sich der Einsatz derartiger Sonnenkollektoren insbesondere dort, wo ohnehin eine Abdeckung einer Fläche erforderlich ist. Dies ist zum Beispiel bei Hausdächern oder Hauswänden der Fall. Dadurch kommt es einerseits zu keiner zusätzlichen Versiegelung von Flächen. Darüber hinaus erhöht sich die Wirtschaftlichkeit der Anlage, da ein Hausdach bzw. eine Hauswand auch unabhängig vom Energiegewinnungsaspekt vorgesehen werden muss.

Derzeit bekannte Solarkollektoren (egal ob thermische und/oder photovoltaische Solarkollektoren) sind in aller Regel als großflächige Paneele ausgebildet. Dadurch sollen insbesondere Montagekosten reduziert werden. Einerseits ist es dadurch möglich, eine große Anzahl von Verbindungen (Flüssigkeitsverbindung/elektrische Verbindung) zu vermeiden. Weiterhin sind bei den bislang bekannten Solarkollektoren in aller Regel aufwändige Dichtungsmaßnahmen zur dichten Einpassung des bzw. der Solarkollektoren erforderlich. Werden die Solarkollektoren beispielsweise auf einem Hausdach verlegt, so sind die Übergangsbereiche zwischen den einzelnen Solarkollektoren sowie zwischen den Solarkollektoren und den Dachziegeln der verbleibenden Dachfläche durch entsprechende Dichtungsmaßnahmen abzudichten. Derartige Dichtungsmaßnahmen sind relativ aufwändig, kompliziert und oftmals nur durch einen Fachmann zu realisieren.

Ein weiterer Nachteil bekannter Solarkollektoren besteht in aller Regel darin, dass diese als im Wesentlichen ebene, großflächige Paneele ausgebildet sind. Daher sind Solarkollektoren optisch entsprechend auffällig. Gerade bei denkmalgeschützten Gebäuden verbietet sich daher aus optischen Gründen oftmals eine Nachrüstung mit Solarkollektoren, oder eine Nachrüstung ist zumindest unerwünscht. Zum Teil stehen auch Bauvorschriften einer Anbringung von Solarkollektoren entgegen.

Die Aufgabe der Erfindung besteht daher darin, ein gegenüber dem Stand der Technik verbessertes Abdeckelement für ein Abdecksystem vorzuschlagen. Darüber hinaus besteht die Aufgabe der Erfindung darin, ein gegenüber dem Stand der Technik verbessertes Abdecksystem zu schaffen.

Es wird vorgeschlagen, ein Abdeckelement für ein Abdecksystem, bei dem eine Fläche durch eine Mehrzahl von einzelnen Abdeckelementen und/oder Basisabdeckelementen abgedeckt wird, und bei dem ein einzelnes Abdeckelement einen Abdeckumriss aufweist, welcher dem Abdeckumriss eines einzelnen Basisabdeckelements und/oder dem Abdeckumriss einer Mehrzahl in Abdeckanordnung angeordneter Basisabdeckelemente entspricht, derart weiterzubilden, dass das Abdeckelement zumindest eine Lichtempfangseinrichtung aufweist. Möglich ist es im Übrigen auch, dass das Abdeckelement zusätzlich oder alternativ zur zumindest einen Lichtempfangseinrichtung zumindest eine Lichtsendeeinrichtung aufweist. Dadurch, dass das Abdeckelement hinsichtlich seines Abdeckumrisses an die Abdeckumrisse der es umgebenden Abdeckelemente bzw. Basisabdeckelemente angepasst ist, kann das vorgeschlagene Abdeckelement sehr einfach in das Verlegemuster des Abdecksystems integriert werden. Insbesondere ist es möglich, auf besondere Übergangselemente bzw. besondere Dichtungsmaßnahmen zumindest im Wesentlichen zu verzichten. Vor allen Dingen ist auch ein nachträglicher Umbau eines bereits vorhandenen Abdecksystems (beispielsweise ein bereits gedecktes Hausdach bzw. eine bereits verkleidete Hauswand) auf einfache Weise möglich, da bereits vorhandene Basisabdeckelemente durch das bzw. die vorgeschlagenen Abdeckelemente ersetzt werden können. Unter Basisabdeckelementen können grundsätzlich beliebige im Stand der Technik vorgeschlagene Abdecksysteme genutzt werden.

Insbesondere ist bei derartigen Abdecksystemen bzw. Basisabdeckelementen an Dachziegel, Dachschindeln, Wandverkleidungsplatten, Wandschindeln, Bodenplatten und dergleichen zu denken. Vorteilhaft ist es, wenn das Abdeckelement derart ausgebildet wird, dass es nicht bzw. nicht deutlich schwerer ist, als ein Basisabdeckelement (bzw. mehrere Basisabdeckelemente, wenn das Abdeckelement von seinem Umriss her mehreren Basisabdeckelementen entspricht; insbesondere kann ein Abdeckelement mit der n-fachen Grundfläche eines einzelnen Basisabdeckelements annähernd das n-fache Gewicht eines einzelnen Basisabdeckelements aufweisen), da dann bereits vorhandene Haltesysteme (beispielsweise bei Dachziegeln ein Dachstuhl) ohne bzw. ohne größere Modifikationen genutzt werden können. In aller Regel ist es aber auch möglich, das vorgeschlagene Abdeckelement leichter oder sogar deutlich leichter als die eigentlichen Basisabdeckelemente zu gestalten. Beispielsweise sind Gewichtsersparnisse von 10 %, 20 %, 25 %, 30 %, 40 %, 50 %, 60 %, 70 %, 75 % oder sogar 80 % möglich. Die Lichtempfangseinrichtung bzw. Lichtsendeeinrichtung kann als kombinierte Einrichtung ("Transeiver") gestaltet werden, oder aber auch als voneinander getrennte Lichtempfangseinrichtung und Lichtsendeeinrichtung. Natürlich ist es auch möglich, lediglich eine Lichtempfangseinrichtung bzw. lediglich eine Lichtsendeeinrichtung zu verwenden. Auch eine Mehrzahl von Lichtsendeeinrichtungen und/oder eine Mehrzahl von Lichtempfangseinrichtungen kann selbstverständlich vorgesehen werden. Weiterhin ist es auch möglich, dass eine oder mehrere Lichtsendeeinrichtungen beziehungsweise eine oder mehrere Lichtempfangseinrichtungen mehrere Elemente aufweisen, die insbesondere in einer Art Matrix angeordnet sein können. Obgleich es möglich ist, dass das Abdeckelement derart gestaltet wird, dass sein Abdeckumriss dem Abdeckumriss einer größeren Anzahl von Basisabdeckelementen entspricht (beispielsweise von zehn oder mehr Basisabdeckelementen), so ist es überraschenderweise von Vorteil, das Abdeckelement relativ klein zu gestalten. Beispielsweise hat es sich als vorteilhaft erwiesen, dass das Abdeckelement von seinem Abdeckumriss her dem Abdeckumriss eines einzelnen Basisabdeckelements oder dem Abdeckumriss einiger weniger Basisabdeckelemente entspricht (beispielsweise 2, 3, 4, 5, 6, 7, 8, 9 oder 10 Basisabdeckelemente). Zwar macht dies in der Regel eine größere Anzahl von Verbindungen (z. B. von Fluidverbindungen, Wärmeübertragungsverbindungen und/oder von elektrischen Verbindungen) erforderlich. Dieser Nachteil wird jedoch in aller Regel überkompensiert, da das Abdeckelement dann relativ einfach zu handhaben ist, und in der Regel kein besonderes Werkzeug zum Transportieren eines Abdeckelements erforderlich ist (z. B. ein Kran oder ein sonstiges Hebezeug). Ganz im Gegenteil kann ein einzelnes Abdeckelement oftmals manuell gehandhabt werden. Dadurch ist es in der Regel insbesondere auch einem Heimwerker ohne größeren Aufwand möglich, die vorgeschlagenen Abdeckelemente zu nutzen.

Vorteilhaft ist es, wenn zumindest eine Lichtempfangseinrichtung als thermische Sonnenkollektoreneinrichtung ausgebildet ist. Zumindest zum derzeitigen Zeitpunkt weisen derartige thermische Solarkollektoreneinrichtungen zumindest in den gemäßigten Breiten ein besonders hohes Kosten-Nutzen-Verhältnis auf. Oftmals sind diese bereits herkömmlichen Heizungssystemen, wie beispielsweise elektrischen oder auf fossilen Brennstoffen basierenden Heizungssystemen wirtschaftlich überlegen. Grundsätzlich ist es möglich, die thermische Solarkollektoreneinrichtung auf beliebige Weise auszuführen. Besonders sinnvoll ist es jedoch, wenn die Solarkollektoreneinrichtung zumindest eine Heat-Pipe-Einrichtung aufweist. Derartige Heat-Pipe-Einrichtungen sind zwischenzeitlich oftmals relativ kostengünstig erhältlich. Darüber hinaus weisen Heat-Pipe-Einrichtungen eine üblicherweise sehr hohe Wärmeübertragungsleistung bei üblicherweise kompakten Abmessungen auf. Zusätzlich und/oder alternativ weisen Heat-Pipe-Einrichtungen darüber hinaus in der Regel eine Art "Wärmesammeleigenschaft" beziehungsweise "Wärmekonzentrationseigenschaft" auf. Diese Eigenschaften erweisen sich üblicherweise als besonders vorteilhaft, um eine über eine relativ große Fläche gewonnene thermische Energie gesammelt, konzentriert und/oder in einem relativ kleinen Bereich zur Verfügung stellen zu können. Dadurch ist es beispielsweise möglich, die gesammelte thermische Energie über einen bestimmten, dezidierten Wärmeübertragungsbereich und/oder über eine Wärmeübertragungseinrichtung an eine andere Einrichtung (wie beispielsweise eine fluiddurchströmte Fluidleitungseinrichtung) zu übertragen. Dadurch ist es oftmals möglich, die erforderliche Länge von Fluidleitungen zu verringern. Dadurch wiederum ist es in der Regel möglich, die im Gesamtsystem erforderliche umlaufende Fluidmenge zu reduzieren. Dadurch kann die thermische Trägheit des Gesamtsystems verringert werden (geringere thermische Gesamtkapazität) und/oder kann der Aufwand bei einem Reparaturfall (zum Beispiel durch Ablassen des Fluids und anschließendes Neubefüllen mit Fluid) zum Teil erheblich verringert werden. Dies gilt insbesondere, da es sich bei dem Fluid üblicherweise um mit Zusatzstoffen versehenes Wasser handelt, wobei die Zusatzstoffe üblicherweise nicht unerhebliche (Zusatz-)Kosten verursachen und/oder deren Entsorgung zum Teil problematisch ist. Als noch weiter bevorzugt erweist es sich jedoch, wenn die Solarkollektoreneinrichtung zumindest eine Heat-Pipe-Einrichtung, zumindest eine Fluidleitungseinrichtung und/oder zumindest eine Lichtadsorptionseinrichtung aufweist. Grundsätzlich können als Fluidleitungseinrichtung im Wesentlichen beliebige Einrichtungen, wie beispielsweise Rohre, insbesondere Kupferrohre, Aluminiumrohre oder Eisenrohre (auch gegebenenfalls aus einer Kupferlegierung, einer Aluminiumlegierung beziehungsweise einer Eisenlegierung wie insbesondere Stahl und/oder Edelstahl gefertigt) verwendet werden. Diese Materialien weisen üblicherweise einen besonders hohen Wärmeübergangskoeffizienten auf, sodass eine besonders hohe Effektivität sichergestellt werden kann. Darüber hinaus sind diese Materialien in der Regel auch relativ stabil und über relativ lange Zeitdauern hinweg belastbar. Die Fluidleitungseinrichtungen können im Übrigen von vornherein integral mit dem Abdeckelement sein, als auch separat vom Abdeckelement ausgebildet sein und erst zu einem späteren Zeitpunkt mit dem Abdeckelement verbunden werden. Nochmals bevorzugt ist es, wenn zumindest eine der Fluidleitungseinrichtungen als längenvariable Fluidleitungseinrichtung, wie beispielsweise zumindest bereichsweise als Wellrohreinrichtung ausgebildet ist. Unter einer "längerenvariablen Fluidleitungseinrichtung" ist insbesondere eine Fluidleitungseinrichtung zu verstehen, welche thermische und/oder sonstige Ausdehnungseffekte beziehungsweise Schrumpfungseffekte in sich aufnehmen und ausgleichen kann. Dies kann beispielsweise durch eine mäanderförmige beziehungsweise leporelloartige Verlegungstechnik von zumindest Teilen der Fluidleitungseinrichtung realisiert werden. Zusätzlich oder alternativ ist es auch möglich, dass die Fluidleitungseinrichtung intrinsisch längenvariabel ausgebildet ist, wie beispielsweise in Form eines Wellrohrs (wobei es selbstverständlich in der Regel ausreichend ist, wenn die Fluidleitungseinrichtung nur abschnittsweise längenvariabel, wie beispielsweise in Form eines Wellrohrs ausgebildet ist). Insbesondere für längenvariable Fluidleitungseinrichtungen erweist es sich aufgrund der erforderlichen hohen Materialfestigkeit und Materialdauerbelastbarkeit üblicherweise als besonders vorteilhaft, wenn in diese zumindest teilweise aus Eisen, aus einer Eisenlegierung, aus Stahl und/oder aus Edelstahl ausgebildet sind. Um möglichst viel Sonnenergie kostengünstig einfangen zu können, ist es sinnvoll, zumindest eine Lichtadsorptionseinrichtung vorzusehen. Dabei kann es sich beispielsweise um Bleche oder ähnliches handeln, die vorzugsweise zumindest bereichsweise oberflächenbehandelt ausgeführt sind. Bei der Oberflächenbehandlung kann es sich beispielsweise um eine besondere verfahrenstechnische Oberflächenvergütung und/oder um eine Beschichtung (beispielsweise um eine Pulverbeschichtung und/oder einen Lack- beziehungsweise einen Farbauftrag handeln). Dabei ist es durchaus denkbar, dass die Beschichtung zumindest teilweise und/oder zumindest bereichsweise dadurch erfolgt, dass Dünnschicht-Photovoltaikeinrichtungen aufgebracht werden. Derartige Dünnschicht-Photovoltaikeinrichtungen können oftmals ähnlich wie Folie oder ein Lack aufgetragen werden können. Die Oberflächenbehandlung (gegebenenfalls auch die Dünnschicht-Fotovoltaikeinrichtungen) ist vorzugsweise derart ausgeführt, dass sich das thermische Absorptionsvermögen verbessert (im Falle einer Beschichtung beispielsweise durch eine schwarze Beschichtung, wobei sich "schwarz" insbesondere auf den thermisch interessanten Lichtspektralbereich, wie insbesondere auf das Infrarotspektrum bezieht). Insbesondere ist es möglich, eine Fluidleitungseinrichtung mit einer Lichtadsorptionseinrichtung zu verbinden, wobei auch eine thermische Verbindung sicher gestellt sein sollte, beispielsweise durch Verschweißen. Dadurch kann die Lichtadsorptionsfläche deutlich vergrößert werden, ohne dass eine überaus große Anzahl von Fluidleitungseinrichtungen vorgesehen werden muss. Insbesondere bei Verwendung von Heat-Pipe-Einrichtungen kann darüber hinaus die über eine relativ große Lichtadsorptionsfläche gesammelte thermische Energie relativ einfach und effektiv gesammelt und konzentriert zu einem bestimmten Bereich (insbesondere zu einem Wärmeübertragungsbereich beziehungsweise zu einer Wärmeübertragungseinrichtung) hin übertragen werden.

Vorteilhaft ist es insbesondere, wenn das Abdeckelement zumindest eine Wärmeübertragungseinrichtung aufweist. Bei der Wärmeübertragungseinrichtung kann es sich insbesondere um eine Wärmeübertragungseinrichtung zur Wärmeübertragung von zumindest einer Heat-Pipe-Einrichtung zu zumindest einer Fluidleitungseinrichtung handeln. Bei der Wärmeübertragungseinrichtung kann es sich insbesondere um eine Einrichtung handeln, die die Fluidleitungseinrichtung teilweise oder sogar (in Wesentlichen) vollständig umgreift und/oder gegebenenfalls zumindest teilweise in diese hineinragt. Die Wärmeübertragungsfläche sollte dabei ausreichend groß gewählt werden, sodass ein ausreichender Wärmeübergang gewährleistet werden kann. Grundsätzlich ist es möglich, dass die entsprechende Einrichtung (insbesondere eine Fluidleitungseinrichtung) vormontiert und gegebenenfalls im Wesentlichen irreversibel gemeinsam mit dem Abdeckelement ausgeführt ist. In diesem Zusammenhang ist beispielsweise an Lötverbindungen zu denken. Eine vorteilhafte Ausführungsform kann sich jedoch auch ergeben, wenn eine entsprechende Einrichtung (insbesondere eine Fluidleitungseinrichtung) unabhängig vom Abdeckelement ausgebildet ist und reversibel mit diesem (insbesondere mittels der Wärmeübertragungseinrichtung) verbunden werden kann.

Als besonders vorteilhaft kann es sich insbesondere in diesem Zusammenhang erweisen, wenn zumindest eine Fluidleitungsaufnahmeeinrichtung vorgesehen ist, welche bevorzugt mit zumindest einer Wärmeübertragungseinrichtung zusammenwirkt und/oder gemeinsam mit zumindest einer Wärmeübertragungseinrichtung ausgebildet ist. Mit Hilfe der Fluidleitungsaufnahmeeinrichtung ist es möglich, dass eine insbesondere thermische und/oder mechanische Verbindung zwischen einer Fluidleitungseinrichtung und einer Wärmeübertragungseinrichtung besonders einfach (reversibel und/oder irreversibel) hergestellt werden kann. Beispielsweise kann es sich bei der Fluidleitungsaufnahmeeinrichtung um eine Art Rohrschelle handeln. Auch ist es denkbar, dass es sich um zwei halbkreisförmig ausgebildete Aufnahmeelemente handelt, die mittels Schrauben (oder sonstiger Verbindungselemente) unter gleichzeitiger Aufnahme der Fluidleitungseinrichtung miteinander verbunden werden können. Mit Hilfe der vorgeschlagenen Weiterbildung ist es insbesondere möglich, dass die Fluidleitungseinrichtung (zunächst) unabhängig vom Abdeckelement produziert und/oder verlegt beziehungsweise angeordnet werden kann. Dadurch ist es möglich, dass eine Fluidleitungseinrichtung verwendet werden kann, die sich über mehrere Abdeckelemente hinweg erstrecken kann. Dadurch können (in der Regel relativ aufwändig herzustellende) fluiddicht auszuführende Verbindungen vermieden werden. Insbesondere kann sich auch das Problem von Fluidleckagen verringern. Auch kann dann ein Austausch einzelner Abdeckelemente besonders leicht möglich sein. Insbesondere ist es in der Regel möglich, dass die die Abdeckelemente verbindende Fluidleitungseinrichtung auch in einem Reparaturfall "unangetastet" bleiben kann (also beispielsweise auf einem Dachstuhl befestigt verbleiben kann).

Sinnvoll kann es auch sein, dass zumindest eine Lichtempfangseinrichtung als Photovoltaikeinrichtung, insbesondere als substratartige Photovoltaikeinrichtung und/oder als Dünnschicht-Photovoltaikeinrichtung ausgebildet ist und/oder zumindest eine Lichtsendeeinrichtung vorgesehen ist, die bevorzugt als aktive Lichtsendeeinrichtung, wie insbesondere als Lampeneinrichtung und/oder als LED-Einrichtung ausgebildet ist. Da Photovoltaikeinrichtungen aus Sonnenenergie direkt und unmittelbar elektrische Energie erzeugen können, kann auf diese Weise besonders einfach und effektiv die besonders hochwertige und universell einsetzbare elektrische Energieform gewonnen werden. Bei den Photovoltaikeinrichtungen kann es sich nicht nur um die klassische "waferbasierte" Bauform handeln. Insbesondere ist auch an die Verwendung von Dünnschicht-Photovoltaikeinrichtungen zu denken. Diese können beispielsweise ähnlich wie ein Lack durch Siebdruckverfahren oder ähnliches aufgebracht werden. Insbesondere sind derartige Dünnschicht-Photovoltaikeinrichtungen in der Regel besonders kostengünstig herzustellen. Insbesondere eine Kombination einer Photovoltaikeinrichtung und einer thermischen Solarkollektoreneinrichtung kann sich als sinnvoll erweisen, indem beispielsweise die eintreffende Sonnenenergie "doppelt" genutzt wird. Einerseits kann aus der einfallenden Sonnenenergie Strom gewonnen werden. Da dies nur zu einem gewissen Anteil funktioniert, kommt es zwangsläufig zu einer Erwärmung der Photovoltaikeinrichtung. Die so in der Photovoltaikeinrichtung entstehende thermische Energie kann jedoch mittels einer thermischen Solarkollektoreneinrichtung genutzt werden. Der üblicherweise relativ niedrige Wirkungsgrad von Photovoltaikeinrichtungen (insbesondere von Dünnschicht-Photovoltaikeinrichtungen) spielt dabei im vorliegenden Anwendungsgebiet eine eher geringe Rolle, da das Hauptaugenmerk typischerweise auf der Erzeugung von thermischer Energie liegt und die Stromerzeugung lediglich eine vorteilhafte Ergänzung darstellt. Die vorgeschlagene Lichtsendeeinrichtung kann vorzugsweise als aktive Lichtsendeeinrichtung ausgebildet sein. Möglich ist es, eine Art Matrix von aktiven Lichtsendeeinrichtungen vorzusehen (wobei die Matrix auch durch eine große Anzahl von Abdeckelementen ausgebildet werden kann). Dadurch ist es beispielsweise möglich, das entsprechende Abdeckelement zu Werbezwecken bzw. zu sonstigen Hinweiszwecken (beispielsweise Abspielen von Nachrichten oder ähnlichem) zu nutzen. Als aktive Lichtsendeeinrichtung haben sich beispielsweise Lampeneinrichtungen (herkömmliche Glühbirnen, Halogenglühbirnen usw.), insbesondere aber auch LED-Einrichtungen als sinnvoll erwiesen. Grundsätzlich ist es jedoch auch möglich, dass die Lichtsendeeinrichtung passiv ist, und beispielsweise nur einen gewissen Farbanteil der auftreffenden Sonnenenergie reflektiert. Dieser reflektierte (Farb-) Anteil kann durch entsprechende Bauteile auch variabel gestaltet werden (z.B. LCD-Elemente).

Vorteilhaft ist es, wenn das Abdeckelement zumindest eine seitlich angeordnete Dichteinrichtung aufweist. Diese Dichteinrichtung kann zur Abdichtung zwischen zwei Abdeckelementen bzw. zur Abdichtung eines Übergangs zwischen einem Abdeckelement und einem Basisabdeckelement genutzt werden. Besonders sinnvoll ist es dabei in der Regel, wenn die Dichteinrichtung analog zu den Dichteinrichtungen der Basisabdeckelemente gestaltet ist. Insbesondere ist in diesem Zusammenhang an sogenannte Wasserfalze bzw. Deckfalze zu denken, wie sie von herkömmlichen Dachziegeln her bekannt sind. Dadurch kann ein besonders leichter Austausch eines Basisabdeckelements durch ein Abdeckelement nochmals gefördert werden, was insbesondere einen nachträglichen Einbau der vorgeschlagenen Abdeckelemente erleichtert.

Sinnvoll ist es auch, wenn zumindest eine Oberflächenstruktur des Abdeckelements zumindest bereichsweise und/oder zumindest teilweise zumindest im Wesentlichen der Oberflächenkontur eines Basisabdeckelements entspricht. Dadurch kann die Austauschbarkeit eines Basisabdeckelements durch ein vorgeschlagenes Abdeckelement nochmals gefördert werden. Beispielsweise weisen viele herkömmliche Dachziegel einen abgerundeten Vorsprung in Form eines "Hügels" auf. Wenn ein derartiger Hügel auch beim vorgeschlagenen Abdeckelement vorgesehen wird, so können Sonderbauformen von Dachziegeln (beispielsweise Dachsteine, Lüftungsdachsteine, Dachpfannen und dergleichen) besonders einfach auch in Kombination mit dem vorgeschlagenen Abdeckelement realisiert werden. Darüber hinaus kann auch die Optik des Abdeckelements nochmals stärker an die Optik der Basisabdeckelemente angepasst werden. Insbesondere ist es denkbar, dass die Oberflächenkontur eines Abdeckelements und eines Basisabdeckelements längs eines oder mehrerer Querschnitte im Wesentlichen einander entsprechen.

Sinnvoll ist es auch, wenn bei dem Abdeckelement in einem Einbauzustand die von außen sichtbare Formgebung des Abdeckelements und/oder die mechanischen Verbindungsbereiche des Abdeckelements in Wesentlichen dem eines Basisabdeckelements entsprechen. Auch hierdurch kann sich das Abdeckelement von seiner Optik her besonders gut an die Basisabdeckelemente anpassen, so dass das Abdeckelement in aller Regel nicht störend auffällt. Im Übrigen ist es auch denkbar, dass die Farbgebung des Abdeckelements, beispielsweise durch eine entsprechende Materialwahl und/oder durch Farbstoffe, an die Farbgebung der Basisabdeckelemente zumindest teilweise und/oder im Wesentlichen angepasst wird. Auch dadurch können sich die vorgeschlagenen Abdeckelemente optisch besonders gut an die Basisabdeckelemente anpassen. Insbesondere wenn die mechanischen Verbindungsbereiche des Abdeckelements und der Basisabdeckelemente im Wesentlichen einander entsprechen, ist es auch in aller Regel nicht erforderlich, die Stützstruktur für das Abdecksystem (beispielsweise ein Dachstuhl oder eine Häuserwand) anzupassen. Hierbei ist insbesondere an mechanische Verbindungselemente und dergleichen zu denken.

Eine weitere, vorteilhafte Weiterbildung des Abdeckelements kann sich ergeben, wenn dieses zumindest einen Befestigungsbereich aufweist, insbesondere zumindest einen Befestigungsbereich, der mit zumindest einem Befestigungsbereich eines anderen Abdeckelements und/oder eines BasisAbdeckelements korrespondiert. Hier ist beispielsweise an im Wesentlichen runde, zapfenartige Vorsprünge auf der Unterseite und/oder der Oberseite des Abdeckelements zu denken. Mit diesen Vorsprüngen ist es beispielsweise möglich, das Abdeckelement an den Balken eines Dachstuhls einzuhängen. Zusätzlich oder alternativ ist es auch möglich, dass die Befestigungsbereiche mit Bohrungen versehen sind (beispielsweise mittige Bohrungen in einem zapfenartigen Vorsprung). Die Bohrungen können beispielsweise zum Durchführen einer Schraube oder eines ähnlichen Befestigungselements dienen. Besonders bevorzugt ist es, wenn der beziehungsweise die Befestigungsbereiche derart ausgebildet sind, dass diese in Kombination mit einem weiteren Abdeckelement beziehungsweise in Kombination mit einem Basis-Abdeckelement eine Art "Befestigungspaar" bilden. Bei einem derartigen "Befestigungspaar" ist beispielsweise an eine Zapfen-Nut-Verbindung zu denken. Unabhängig von der konkreten Bauausführung des Befestigungsbereichs kann die Befestigung des Abdeckelements in aller Regel insbesondere besonders fest und haltbar ausgeführt werden.

Vorteilhaft ist es darüber hinaus auch, wenn das Abdeckelement mehrere Baugruppen, insbesondere mehrere Gehäusebaugruppen aufweist, besonders bevorzugt zumindest eine Oberschaleneinrichtung, zumindest eine Mittelteileinrichtung, zumindest eine Seitenteileinrichtung und/oder zumindest eine Unterschaleneinrichtung aufweist. Durch das Vorsehen mehrerer Gehäusebaugruppen kann in der Regel die Fertigung des Abdeckelements vereinfacht werden. Speziell ist es möglich, dass die einzelnen Gehäusebaugruppen besonders gut auf ihre jeweilige Funktion hin optimiert werden können. So kann beispielsweise eine Oberschaleneinrichtung (gegebenenfalls auch eine Seitenteileinrichtung) auf eine möglichst gute Lichtdurchlässigkeit und/oder besondere optische "Unauffälligkeit" hin optimiert werden. Insbesondere eine Unterschaleneinrichtung kann auf eine besonders effektive Wärmedämmung hin optimiert werden. Dadurch kann einerseits ein "Verlust" an gewonnener thermischer Energie verringert werden. Andererseits kann beispielsweise ein Dachstuhl vor einer zu starken (gegebenenfalls branderzeugenden) Erwärmung geschützt werden. Eine Wärmedämmung kann insbesondere mit Hilfe der wärmedämmender Materialien, wie insbesondere Presskork, Mineralschaum, Isolierschaum, Aerogelen und/oder Nano-Aerogelen erfolgen. Dies können beispielsweise in einer Unterschaleneinrichtung, insbesondere in dem Zwischenraum zwischen einer Unterschaleneinrichtung und eine Mittelteileinrichtung angeordnet werden. Auch an eine zusätzliche und/oder alternative Anordnung zwischen einer Mittelteileinrichtung und einer Oberschaleneinrichtung ist zu denken. Speziell bei Verwendung von relativ transparenten Aerogelen/Nano-Aerogelen ist der thermische Gewinn bei Dicken von typischerweise mehreren Millimetern in der Regel größer als der Verlust an ein fallender Solarenergie. Bei der Mittelteileinrichtung kann es sich insbesondere um die Baugruppe handeln, die die eigentlichen "technischen Einrichtungen", beziehungsweise die Mehrzahl der eigentlichen "technischen Einrichtungen" aufweist. Diese kann beispielsweise klemmend zwischen Oberschaleneinrichtung, Unterschaleneinrichtung und/oder gegebenenfalls Seitenteileinrichtung aufgenommen werden. Speziell Oberschaleneinrichtungen, Unterschaleneinrichtungen und/oder gegebenenfalls auch Seitenteileinrichtungen können vorzugsweise zumindest teilweise und/oder zumindest bereichsweise aus einem Kunststoffmaterial gefertigt werden. Weiterhin ist insbesondere eine Wartung beziehungsweise Reparatur eines Abdeckelements bei Verwendung mehrerer Gehäusebaugruppen in der Regel besonders einfach.

Es hat sich als vorteilhaft erwiesen, wenn das Abdeckelement zumindest ein Material aufweist, welches der Gruppe entnommen ist, die transparente Materialen, durchsichtige Materialien, Kunststoffe, Recyclingmaterialien, Makrolon, Isolationsmaterialien, Neopren, Vliesmaterialien, Glasgewebe, Glas, Farbstoffe, Kupfer, Kupferlegierungen, Eisen, Eisenlegierungen, Stahl, Edelstahl, Aluminium, Aluminiumlegierungen, wärmeisolierende Materialien, Presskork, Mineralschaum, Isolierschaum, Aerogele und/oder Nano-Aerogele umfasst. Durch die vorgeschlagenen Materialien ist es möglich, das Abdeckelement in mannigfaltiger Hinsicht an unterschiedlichste Vorgaben anzupassen. Insbesondere ist ein Materialmix aus den vorgeschlagenen Materialien und gegebenenfalls aus weiteren Materialien denkbar. Der Materialmix kann dabei insbesondere auch in einer Nebeneinander-Anordnung unterschiedlicher Materialien bestehen.

Weiterhin wird vorgeschlagen, dass das Abdeckelement mit zumindest einem Schnellverbindungselement versehen wird. Insbesondere kann es sich dabei um zumindest ein fluidisches Schnellverbindungselement (insbesondere beim Vorhandensein einer thermischen Solarkollektoreneinrichtung), um zumindest ein mechanisches Schnellverbindungselement (insbesondere um eine Fluidleitungsaufnahmeeinrichtung), um zumindest ein thermisches Schnellverbindungselement und/oder um zumindest ein elektrisches Schnellverbindungselement (insbesondere beim Vorhandensein einer Lichtsendeeinrichtung und/oder einer Photovoltaikeinrichtung) handeln. Mit einem derartigen Schnellverbindungselement kann das vorgeschlagene Abdeckelement besonders einfach, schnell und kostengünstig verlegt werden. Insbesondere im Fall von Fluidleitungen können an sich bekannte Schlauchkupplungssysteme als Schnellverbindungselemente vorgesehen werden. Im Fall von elektrischen Leitungen ist insbesondere an elektrische Steckkontaktsysteme zu denken. Insbesondere können die Schnellverbindungselemente auch derart ausgeführt werden, dass ein Verlegen auch durch ungelernte Kräfte und/oder Heimwerker möglich ist. Insbesondere im Fall von elektrischen Verbindungssystemen (auch, aber nicht nur im Falle von elektrischen Schnellverbindungselementen) ist es auch möglich, die Anzahl der elektrischen Kontakte und/oder die Anzahl der erforderlichen elektrischen Leiterbahnen durch die Verwendung von Bussystemen zu verringern. Bei mechanischen Schnellverbindungselementen ist insbesondere an Systeme zu denken, bei denen ein rohrartiges Element (insbesondere eine Fluidleitungseinrichtung) besonders einfach befestigt werden kann, vorzugsweise derart, dass sich ein möglichst hochwertiger Wärmeübergang zwischen Schnellverbindungselementen und Fluidleitungseinrichtungen ergibt. In letzterem Fall kann somit das mechanische Schnellverbindungselement gleichzeitig als thermisches Schnellverbindungselement dienen.

Als vorteilhaft hat es sich auch erwiesen, wenn das Abdeckelement zumindest eine temperaturempfindliche Einrichtung, insbesondere zumindest eine temperaturempfindliche Fluidbeeinflussungseinrichtung aufweist. Insbesondere bei thermischen Solarkollektoren kann es dadurch ermöglich werden, dass die Abdeckelemente selbstregelnd ausgeführt werden, so dass beispielsweise der Fluiddurchsatz durch das Abdeckelement reduziert wird, wenn eine relativ niedrige Sonneneinstrahlung vorliegt. Die Fluidbeeinflussungseinrichtung kann insbesondere als Fluiddurchsatzbeeinflussungseinrichtung ausgebildet sein. Dadurch ist es beispielsweise möglich, eine gewisse Mindesttemperaturerhöhung sicher zu stellen. Im Extremfall kann der Fluiddurchsatz auch vollständig unterbrochen werden. Zusätzlich oder alternativ ist es möglich, die Fluidbeeinflussungseinrichtung als Fluidleiteinrichtung zu gestalten, so dass nicht nur der Fluiddurchsatz durch das Abdeckelement reduziert wird, sondern zumindest ein Teil des Fluidstroms an der thermischen Kollektoreneinrichtung des Abdeckelements vorbeigeleitet wird. In diesem Zusammenhang ist darauf hinzuweisen, dass es durchaus möglich ist, dass nicht alle Abdeckelemente gleichzeitig einer geringeren Sonneneinstrahlung ausgesetzt sind (beispielsweise durch Bewölkung und/oder durch unterschiedlichen Sonnenstand hervorgerufen), sondern dass es auch durchaus möglich ist, dass beispielsweise durch Abschattungen unterschiedliche Abdeckelemente einer unterschiedlichen Sonneneinstrahlung ausgesetzt sind. Auch in diesem Fall kann durch die vorgeschlagenen temperaturempfindlichen Einrichtungen ein selbstregelndes System besonders einfach realisiert werden.

Vorteilhaft ist es darüber hinaus, wenn zumindest eine zusätzliche Einrichtung, wie insbesondere eine Lichtempfangseinrichtung, eine Lichtsendeeinrichtung, eine Fluidleitungseinrichtung, eine Wärmeübertragungseinrichtung, eine Heat-Pipe-Einrichtung, eine elektrische Leiteinrichtung und/oder eine Verbindungseinrichtung zumindest bereichsweise in einer Ausnehmung des Abdeckelements angeordnet sind, wobei vorzugsweise die Ausnehmung nach Aufnahme der zusätzlichen Einrichtungen zumindest bereichsweise verschlossen wird. Derartige Ausnehmungsbereiche können bei den Abdeckelementen beispielsweise dann vorhanden sein, wenn diese eine Formgebung aufweisen, die der herkömmlicher Abdeckelemente, wie beispielsweise von Dachziegeln entspricht. So haben viele Dachziegelformen einen etwa in der Mitte liegenden "Wulst". Auf der Rückseite dieses Wulstes können beispielsweise die zusätzlichen Einrichtungen vorgesehen werden. Dies hat unter anderem den Vorteil, dass eine ebene Rückseite des Abdeckelements realisiert werden kann, insbesondere aber zumindest in Teilbereichen keine vorspringenden Teile vorhanden sind. Dadurch kann eine Kompatibilität mit bisherigen Haltevorrichtungen (z. B. Dachstuhl) besonders einfach sicher gestellt werden. Wenn anschließend die entsprechenden Bereiche zumindest teilweise verschlossen (beispielsweise vergossen) werden, so sind darüber hinaus die zusätzlichen Einrichtungen besonders gut gegen Umwelteinflüsse geschützt.

Vorteilhaft ist es, wenn das Abdeckelement zumindest bereichsweise als Dachabdeckelement, insbesondere als Dachziegel und/oder zumindest bereichsweise als Wandabdeckelement, insbesondere als Schindel, ausgebildet ist. Auf diese Weise kann das Abdeckelement besonders gut anstelle eines herkömmlichen Abdeckelements, beispielsweise anstelle eines üblichen Dachziegels (oder mehrerer Dachziegel) eingesetzt werden.

Sinnvoll ist es weiterhin, wenn die Oberfläche des Abdeckelements zumindest bereichsweise selbstreinigend ausgebildet ist. Eine derartige selbstreinigende Oberfläche kann beispielsweise durch das Vorsehen von Mikrostrukturen (Lotusblüteneffekt) realisiert werden. Auch das Vorsehen entsprechender Anschrägungen kann in Zusammenhang mit Regen selbstreinigend wirken. Durch die Selbstreinigung kann eine Verminderung des Lichteinfalls bzw. der Lichtemission in das Abdeckelement hinein bzw. aus dem Abdeckelement heraus verringert werden, so dass das Abdeckelement eine besonders hohe Effizienz behalten kann, ohne dass beispielsweise besondere Reinigungsmaßnahmen vonnöten wären. Selbstverständlich können zusätzlich oder alternativ auch aktive Reinigungseinrichtungen vorgesehen werden. Diese können beispielsweise als in Form von mit Düsen ausgerüsteter Abdeckelemente vorgesehen werden, wobei die Düsen ein entsprechendes, geeignetes Reinigungsfluid austragen können. Grundsätzlich ist es möglich, dass in Wesentlichen alle Abdeckelemente mit derartigen Düsen versehen sind. Es sich jedoch auch als vorteilhaft erweisen, wenn lediglich ein Teil der Abdeckelemente (beispielsweise die oberste Reihe an Abdeckelementen) derartige Düsen aufweist. Denkbar ist es aber auch, dass zusätzlich und/oder alternativ auch gesonderte, Düsen aufweisende Elemente vorgesehen werden, die beispielsweise in Form einer Giebelabdeckreihe vorgesehen werden. Unter "Reinigung" ist im Übrigen nicht notwendigerweise (ausschließlich) an eine Reinigung in Bezug auf Schmutzpartikel zu denken. Zusätzlich und/oder alternativ kann der Begriff "Reinigung" auch eine Enteisung von Oberflächen umfassen.

Vorteilhaft ist es auch, wenn zumindest bereichsweise kondensationsmindernde Einrichtungen vorgesehen sind, insbesondere kondensationsmindernde Einrichtungen, welche auf Innenbereiche des Abdeckelements einwirken. Beispielsweise kann innerhalb des Abdeckelements ein Vakuum oder eine Schutzgasatmosphäre vorgesehen werden. Dadurch kann verhindert werden, dass beispielsweise Wasserdampf eindringen kann, sich an den Innen- oder Außenwänden des Abdeckelements niederschlagen kann, und so den Lichtdurchtritt verhindern kann. Darüber hinaus kann die kondensationsmindernde Einrichtung gleichzeitig thermisch isolierend wirken (beispielsweise im Falle von Vakuum bzw. bestimmten Schutzgasen).

Weiterhin wird ein Abdecksystem vorgeschlagen, welches zumindest ein Abdeckelement sowie gegebenenfalls zumindest ein Basisabdeckelement mit dem oben vorgeschlagenen Aufbau vorweist. Das Abdecksystem weist dann die bereits im Zusammenhang mit dem Abdeckelement beschriebenen Vorteile und Eigenschaften in analoger Weise auf. Insbesondere ist auch eine Weiterbildung im Sinne der oben beschriebenen Modifikationen möglich.

Insbesondere ist es möglich, dass zumindest ein Teil der Abdeckelemente fluidisch und/oder elektrisch miteinander gekoppelt sind. Insbesondere ist es möglich, die Abdeckelemente zumindest teilweise seriell und/oder zumindest teilweise parallel miteinander zu koppeln. Je nach Verschaltung kann dadurch eine höhere Ausgangstemperatur bzw. Ausgangsspannung und/oder eine größere Durchflussmenge bzw. ein größerer elektrischer Strom realisiert werden. Dabei ist es durchaus möglich, dass die Art der Verschaltung (beispielsweise seriell und/oder parallel) variabel ausgeführt wird, und insbesondere in Abhängigkeit von unterschiedlichen Sonneneinfallsszenarien angepasst wird. Insbesondere die elektrische Kopplung kann unter zumindest teilweiser Verwendung von Bussystemen erfolgen.

Eine besonders bevorzugte Ausführung des Abdecksystems kann sich dabei ergeben, wenn sich zumindest eine Fluidleitungseinrichtung, insbesondere zumindest eine längenvariable Fluidleitungseinrichtung, wie beispielsweise eine zumindest abschnittsweise als Wellrohreinrichtung ausgebildete Fluidleitungseinrichtung, bevorzugt über eine Mehrzahl von Abdeckelementen erstreckt. Wie bereits erläutert, können hierdurch in der Regel insbesondere Fluidleckageprobleme besonders effektiv verringert beziehungsweise verhindert werden, und auch die Montage (insbesondere die Reparatur) eines fertig montierten Abdecksystems in der Regel zum Teil stark vereinfacht werden.

Im Folgenden wird die Erfindung anhand von Ausführungsbeispielen und unter Bezugnahme auf die Figuren detailliert beschrieben. Es zeigen:
- Fig. 1:: ein erstes Ausführungsbeispiel eines Solardachziegels in einem schematischen Querschnitt;
- Fig. 2:: den in Fig. 1 gezeigten Solardachziegel in einer schematischen, per- spektivischen Draufsicht;
- Fig. 3:: den in den Fig. 1 und 2 gezeigten Solardachziegel in verlegtem Zu- stand von der Seite aus gesehen;
- Fig. 4:: ein Verschaltungsbeispiel für eine Anordnung aus mehreren Solar- dachziegeln;
- Fig. 5:: eine schematische, perspektivische Ansicht eines teilweise mit her- kömmlichen Dachziegeln, teilweise mit Solardachziegeln gedeckten Hauses;
- Fig. 6:: ein zweites Ausführungsbeispiel für einen Solardachziegel in einem schematischen Querschnitt;
- Fig. 7:: den in Fig. 6 gezeigten Solardachziegel in einer schematischen, per- spektivischen Draufsicht;
- Fig. 8:: ein drittes Ausführungsbeispiel für einen Solardachziegel in einer schematischen Explosionsansicht.

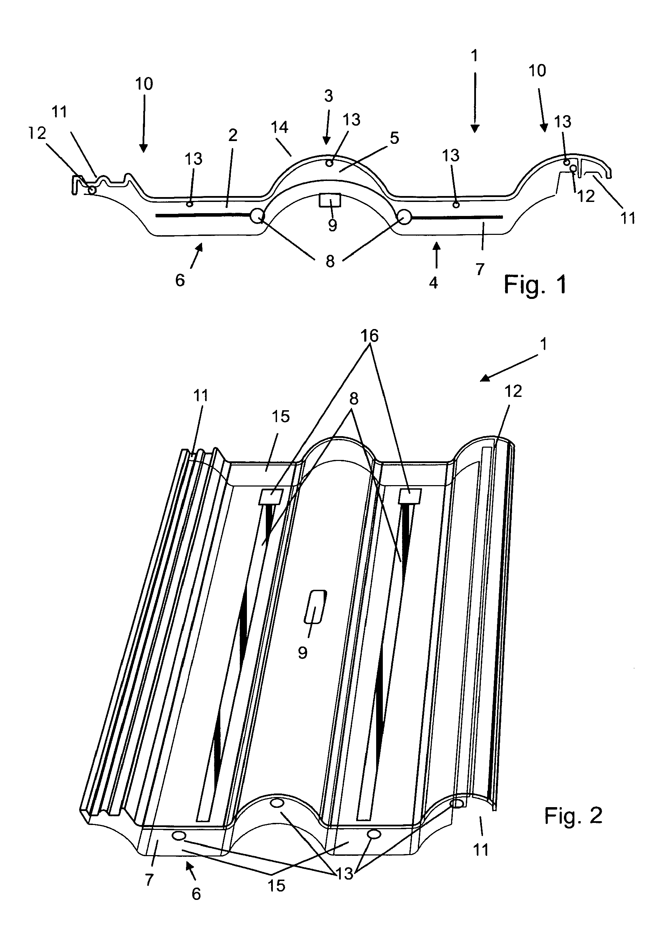

In Fig. 1 ist ein erstes Ausführungsbeispiel für einen Solardachziegel 1 in einer schematischen Querschnittsansicht dargestellt. Der Grundkörper 2 des Solardachziegels 1 weist eine Formgebung auf, die im Wesentlichen der Formgebung eines herkömmlichen Dachziegels 30 entspricht. In diesem Zusammenhang ist darauf hinzuweisen, dass anstelle der in Fig. 1 gezeigten Dachziegelform selbstverständlich auch andere Dachziegelformen (insbesondere andere gebräuchliche Dachziegelformen) als Grundlage für die Formgebung des Solardachziegels 1 dienen können.

Der Solardachziegel 1 ist auf seiner Oberseite 3 aus einem transparenten, vorzugsweise weitgehend durchsichtigen Material gefertigt. Im vorliegend dargestellten Ausführungsbeispiel wird dabei ein schlagfester bzw. schlagzäher Kunststoff verwendet. Die Unterseite 4 des Solardachziegels kann dagegen problemlos aus einem nicht-durchsichtigen bzw. nicht-transparenten Material gefertigt werden. In vorliegendem Ausführungsbeispiel wird ein glasfaserverstärkter Kunststoff verwendet.

Die Oberseite 3 und die Unterseite 4 des Solardachziegels sind im Wesentlich luftdicht miteinander verbunden, derart, dass sich im Inneren 5 des Grundkörpers 2 ein Hohlraum 5 bildet. Im Hohlraum 5 ist die eigentliche thermische Solarkollektoreneinheit 6 angeordnet. Die thermische Solarkollektoreneinheit 6 weist ein thermisch leitfähiges, lichtabsorbierendes flächiges Material 7 auf. Beispielsweise kann es sich um ein beschichtetes Blech 7 (welches beispielsweise schwarz beschichtet ist) handeln (wobei zumindest eine beschichtete Seite der thermischen Solarkollektoreneinheit 6 vorzugsweise in Richtung der Oberseite 3 des Solardachziegels 1 weisen sollte). Die vom beschichteten Blech 7 gesammelte thermische Energie wird über Wasserleitungen 8 abgeführt. Die Wasserleitungen 8 sind thermisch leitfähig mit dem beschichteten Blech 7 verbunden. Beispielsweise kann die Verbindung zwischen dem beschichteten Blech 7 und den Wasserleitungen 8 durch einen Schweißvorgang hergestellt werden. In vorliegendem Ausführungsbeispiel sind die Wasserleitungen 8 aus Kupfer, aus Aluminium, aus einer Kupferlegierung und/oder aus einer Aluminiumlegierung gefertigt. Selbstverständlich sind auch andere Materialien denkbar. Im Übrigen ist es auch möglich, die Wasserleitungen 8 zur Durchleitung eines anderen Fluids zu verwenden.

An der Unterseite 4 des Solardachziegels ist ein Rückschlagventil 9 vorgesehen. Bei einer Erwärmung des Solardachziegels 1 erwärmt sich auch die im Hohlraum 5 des Solardachziegels 1 befindliche Luft. Aufgrund der Temperaturerhöhung dehnt sich die Luft aus und entweicht durch das Rückschlagventil 9. Kommt es anschließend zu einer Abkühlung des Solardachziegels 1, kühlt auch die im Hohlraum 5 verbliebene restliche Luft wieder ab. Aufgrund des Rückschlagventils 9 kann jedoch keine Luft von außen in den Hohlraum 5 des Solardachziegels einströmen. Dadurch kommt es im Hohlraum 5 des Solardachziegels zu einem Unterdruck. Vorteilhaft kann hier insbesondere sein, dass zu solchen Zeitpunkten, zu denen eine erhöhte Wahrscheinlichkeit für eine Kondensatbildung auf der Innenseite des Solardachziegels 1 vorhanden ist (zum Beispiel im Winter in den frühen Morgenstunden), im Hohlraum 5 des Solardachziegels 1 ein Unterdruck vorherrscht. Durch den Unterdruck kann eine Kondensatbildung üblicherweise verhindert, unter besonders widrigen Umständen jedoch zumindest gemindert werden. Dies kann wiederum den Wirkungsgrad des Solardachziegels 1 erhöhen.

Analog zu üblichen Dachziegeln weist auch der Solardachziegel 1 an seinen Seitenbereichen 10 sogenannte Wasserfalze 11 auf. Um eine besonders hohe Dichtungswirkung zwischen zwei nebeneinander angeordneten Solardachziegeln, welche in einer Verlegeanordnung 19 zueinander angeordnet sind, zu erzielen (entsprechendes gilt für eine Anordnung 19 zwischen einem Solardachziegel 1 und einem herkömmlichen Dachziegel 30), ist an den beiden Wasserfalzen 11 (in Fig. 1 links und rechts) jeweils ein zusätzliches Dichtungsband 12 vorgesehen, welches beispielsweise aus einem silikonhaltigen Material gefertigt sein kann.

Um den Solardachziegel 1 optisch möglichst weitgehend an bekannte Dachziegel 30 anzupassen, weist der Solardachziegel 1 nicht nur - wie bereits beschrieben - eine im Wesentlichen mit herkömmlichen Dachziegeln 30 übereinstimmende Formgebung auf. Zusätzlich ist es auch möglich, dass zumindest Teile des Materials an der Oberseite 3 des Solardachziegels und/oder zumindest Teile des beschichteten Blechs 7 des Solardachziegels 1 farblich an bekannte Dachziegel angepasst werden. Beim beschichteten Blech 7 kann dazu eine farblich entsprechend angepasste Beschichtung verwendet werden. In Bezug auf die Oberseite 3 des Solardachziegels 1 kann beispielsweise ein mit Farbstoffen versehenes durchsichtiges bzw. transparentes Material verwendet werden, das mit Hilfe des Farbstoffs farblich geeignet angepasst wurde.

Der Wölbungsbereich 14, der beim Solardachziegel 1 vorgesehen ist, um diesen von seiner Formgebung her an herkömmliche Dachziegel 30 anzupassen, kann zusätzlich fokussierend wirken, so dass auf dem Solardachziegel einfallendes Sonnenlicht speziell auf solche Bereiche des beschichteten Blechs 7 gerichtet werden, die benachbart zu den Wasserrohren 8 liegen. Dadurch kann eine höhere thermische Effizienz des Solardachziegels 1 realisiert werden.

Zusätzlich sind im Solardachziegel 1 mehrere Leuchtmittel 13 vorgesehen. Bei den Leuchtmitteln 13 kann es sich beispielsweise um helle Leuchtdiodeneinheiten handeln. Selbstverständlich ist es auch möglich, dass lediglich ein Leuchtmittel 13 in einem Solardachziegel 1 angeordnet wird. Durch eine geeignete Ansteuerung des bzw. der Leuchtmittel 13 des Solardachziegels 1 ist es möglich, bei einem (teilweise) mit dem vorgeschlagenen Solardachziegel 1 gedeckten Haus 27 durch geeignete Ansteuerung der Leuchtmittel 13 beispielsweise eine Werbebotschaft auszusenden. Selbstverständlich ist auch an die Übermittlung von Informationen (wie beispielsweise Nachrichten) zu denken.

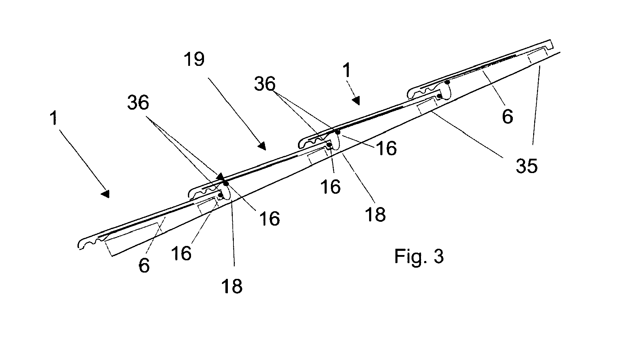

In Fig. 2 ist der in Fig. 1 dargestellte Solardachziegel 1 nochmals in einer perspektivischen Ansicht von schräg oben dargestellt. Insbesondere die Lage der Wasserleitungen 8 des beschichteten Blechs 7 sowie der Leuchtmittel 13 werden durch die in Fig. 2 gewählte Ansicht ersichtlich. Wie in Fig. 2 gut zu erkennen ist, sind die Leuchtmittel 13 in einem vorderen Bereich des Solardachziegels 1 angeordnet. Diese Anordnung hat den Vorteil, dass die Leuchtmittel 13 auch dann nicht von anderen Solardachziegeln 1 beziehungsweise herkömmlichen Dachziegeln 30 überdeckt werden, wenn der Solardachziegel 1 in einer Verlegeanordnung 19 angeordnet ist (vergleiche Fig. 3).

In den Endbereichen 15 der Wasserleitungen 8 sind Schlauchkupplungen 16 vorgesehen. Auf die Schlauchkupplungen 16 können funktionskomplementäre Steckkupplungen 36 aufgesteckt werden. Beispielsweise können flexible Schlauchleitungen 18 verwendet werden, die beidseitig mit derartigen funktionskomplementären Steckkupplungen 36 versehen sind. Mit Hilfe der flexiblen Leitungen 18 können die einzelnen Solardachziegel 1 schnell und einfach fluidisch miteinander verbunden werden. Insbesondere ist es möglich, dass die fluidische Verbindung der einzelnen Solardachziegel 1 ohne besondere Fachkenntnisse erfolgen kann, und insbesondere auch von einem Heimwerker durchgeführt werden kann.

Neben den Schlauchkupplungen 16 ist auch ein elektrisches Steckelement 17 vorgesehen, mit dem der Solardachziegel 1 elektrisch versorgt werden kann. Das elektrische Steckelement 17 ist in einem hinteren Bereich des Solardachziegels 1 angeordnet, so dass es in Verlegeanordnung 19 mit anderen Solardachziegeln 1 beziehungsweise herkömmlichen Dachziegeln 30 abgedeckt ist, dadurch nicht sichtbar ist und darüber hinaus witterungsgeschützt ist. Die Verbindung zwischen Leuchtmitteln 13 und elektrischen Steckelementen 17 erfolgt durch vorliegend nicht dargestellte elektrische Leitungen.

In Fig. 3 ist eine Verlegeanordnung 19 mit mehreren, benachbart zueinander angeordneten Solardachziegeln 1 dargestellt. In Fig. 3 ist eine schematische Ansicht von der Seite aus gewählt worden. Insbesondere ist in Fig. 3 die fluidische Verbindung der einzelnen thermischen Solarkollektoreneinheiten 6 zu erkennen, die mit Hilfe flexibler Schläuche 18 erfolgt. Die Schläuche 18 sind dabei jeweils mit Hilfe von Schlauchkupplungen 16 und Steckkupplungen 36 fluidisch mit den Wasserleitungen 8 der Solardachziegel 1 verbunden.

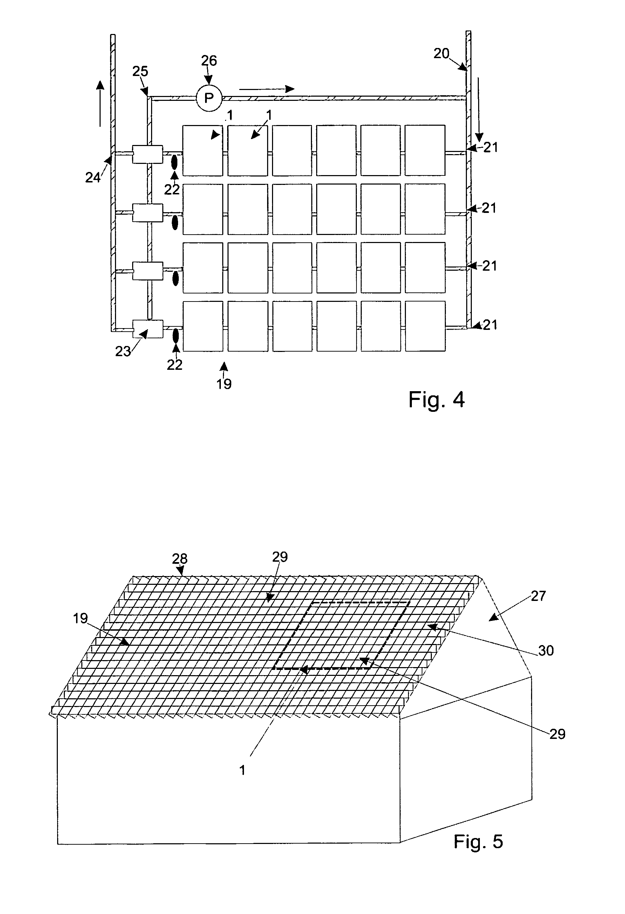

In Fig. 4 ist ein Beispiel für die Verschaltung einzelner Solardachziegel 1 miteinander zur Ausbildung einer Verlegeanordnung 19 in einem schematischen Fluiddurchlaufplan dargestellt. Das von einer Vorlaufleitung 20 herangeführte Wasser wird auf mehrere (in Fig. 4 insgesamt 4) parallel zueinander verlaufende Solarkollektorenstränge 21 aufgeteilt. Innerhalb eines Solarkollektorenstrangs 21 sind mehrere (in Fig. 4 jeweils 4) Solardachziegel 1 seriell hintereinander geschaltet. Am Ende eines jeden Solarkollektorenstrangs 21 befindet sich jeweils ein Temperatursensor 22. Mit Hilfe des Temperatursensors 22 wird die Stellung des jeweils zum Temperatursensor 22 gehörigen Zweiwegeventils 23 verstellt. Weist das vom Solarkollektorenstrang 21 herbeiströmende Wasser eine ausreichende Temperatur auf, so leitet das Zweiwegeventil 23 das Wasser in die Rücklaufleitung 24. Von dort wird es beispielsweise zur Brauchwasserversorgung des Hauses 27 oder zu anderen Zwecken verwendet. Ist die Temperatur des Wasser hingegen zu niedrig, so drosselt das Zweiwegeventil 23 einerseits den Durchlauf durch den betreffenden Solarkollektorenstrang 21 und/oder leitet des Zweiwegeventil 23 das Wasser über eine Kurzschlussleitung 25 zurück in die Vorlaufleitung 20, um es weiter zu erwärmen. Aus strömungstechnischen Gründen ist in der Kurzschlussleitung 25 eine Wasserpumpe 26 vorgesehen. Diese Funktionalität kann beispielsweise durch eine in der Figur nicht dargestellte elektronische Steuerschaltung realisiert werden. Dabei kann es sich beispielsweise um einen oder eine Mehrzahl von Einplatinencomputeren handeln.

Zusätzlich oder alternativ zu den Zweiwegeventilen 23 können auch einzelne in der Drehzahl variable Pumpen vorgesehen werden, mit denen die Wasserdurchströmung der einzelnen Solarkollektorenstränge 21 (beispielsweise von einer elektronischen Steuerschaltung) unterschiedlich stark gewählt werden kann. Dies kann insbesondere durch die Ansteuerung mit einer unterschiedlich hohen elektrischen Spannung realisiert werden.

Selbstverständlich ist es auch möglich, die Temperatursensoren 22 in den Solardachziegeln 1 selbst vorzusehen. Zusätzlich oder alternativ ist es auch möglich, die Zweiwegeventile 23 in den Solardachziegeln 1 selbst vorzusehen. Bei einer derartigen Realisierung kann gegebenenfalls durch die Verwendung von selbstregelnden Ventilen (beispielsweise unter Verwendung von Bimetall-Streifen) ein intrinsisch selbstregelndes System realisiert werden, bei dem keine elektronische Steuerschaltung von Nöten ist (auch wenn die Verwendung einer elektronischen Steuerschaltung insbesondere zur Verbesserung der thermischen Leistung der Gesamtanlage in der Regel zu bevorzugen ist).

Bei einer Verlegung einzelner Solardachziegel 1 zu einer Verlegeanordnung 19 tritt in der Praxis häufig das Problem auf, dass durch Gauben, Dachfenster, Schornsteine, Abzüge, unterbrochene und zeitweise (teil-) verschattete Dachflächen die thermische Leistung der einzelnen Solarkollektorenstränge 21 unterschiedlich hoch ist. Dabei kann die relative Leistung der einzelnen Solarkollektorenstränge 21 zueinander beispielsweise in Abhängigkeit von der Tageszeit variieren. Weiterhin kann bei der Realisierung einer Verlegeanordnung 19 aufgrund der bereits erwähnten Gauben, Dachfenster, Schornsteine, Abzüge und dergleichen die Anzahl der Solardachziegel 1 pro Solarkollektorenstrang 21 auch unterschiedlich groß sein. Auch dies kann zu einer gegebenenfalls deutlich unterschiedlich hohen thermischen Leistung der einzelnen Solarkollektorenstränge 21 führen.

Würden die einzelnen Solarkollektorenstränge 21 mit einer konstanten Durchflussgeschwindigkeit beaufschlagt werden, so würden die unterschiedlichen thermischen Leistungen schlussendlich zu unterschiedlichen Ausgangstemperaturen der Solarkollektorenstränge 21 führen. Durch die Verwendung der oben beschriebenen Zweiwegeventile 23 und/oder durch drehzahlregelbare Pumpen kann dagegen die Ausgangstemperatur der einzelnen Solarkollektorenstränge 21 aufeinander angepasst werden, so dass eine konstante Ausgangstemperatur der Verlegeanordnung 19 sichergestellt werden kann.

Weiterhin ist es bei Verwendung einer elektronischen Steuereinrichtung auch möglich, dass die Ausgangstemperatur der Verlegeanordnung 19 in Abhängigkeit von einem variablen Vorgabewert geändert werden kann. Beispielsweise kann mithilfe der Verlegeanordnung 19 ein thermischer Wärmespeicher aufgeheizt werden. Ist bei kaltem Wärmespeicher die Temperaturdifferenz zwischen der Ausgangstemperatur der Verlegeanordnung 19 und dem Wärmespeicher hoch, so kann für die Verlegeanordnung 19 ein hoher Fluiddurchsatz bei niedriger Ausgangstemperatur gewählt werden. Steigt nun langsam die Temperatur des thermischen Wärmespeichers an, so wird beispielsweise durch eine entsprechende Ansteuerung der Zweiwegeventile 23 und/oder der drehzahlveränderlichen Pumpen das durch die Verlegeanordnung 19 hindurchströmende Fluid verlangsamt, so dass dessen Ausgangstemperatur ansteigt. Dadurch kann der thermische Wärmespeicher weiter thermisch beladen werden, so dass in der Regel auch der Wirkungsgrad der Anlage steigt. Bevorzugt wird die Temperaturdifferenz zwischen Ausgangstemperatur der Verlegeanordnung 19 und der Temperatur des thermischen Wärmespeichers auf einen optimalen Wert eingestellt. Die optimale Temperaturdifferenz hängt in der Regel insbesondere vom individuellen Anlagenaufbau ab.

Selbstverständlich kann durch Veränderung der Strömungsgeschwindigkeit durch die einzelnen Solarkollektorenstränge 21 auch eine unterschiedlich starke Sonneneinstrahlung derart kompensiert werden, dass nach wie vor ein gewünschter Temperaturausgangswert realisiert werden kann.

In Fig. 5 ist in einer schematischen Ansicht ein Haus 27 dargestellt, dessen Dach 28 mit Hilfe von Dachziegeln 29 gedeckt ist. Die Dachziegel 29 bilden eine übliche Verlegeanordnung 19 aus. Vorliegend ist das Dach 28 zu einem Teil mit herkömmlichen Dachziegeln 30, zu einem anderen Teil jedoch mit Solardachziegeln 1 gedeckt. Die Solardachziegel 1 sind zur Verdeutlichung in Fig. 5 mit einer Markierung versehen. Durch die bereits beschriebene farbliche und formenmäßige Anpassung von Solardachziegeln 1 und herkömmlichen Dachziegeln 30 weisen die Dachziegel 29 jedoch ein weitgehend homogenes Erscheinungsbild auf. Somit entsteht ein weitgehend konventioneller Eindruck für das Dach 28 des Hauses 27. Dementsprechend ist die Verlegeanordnung 19 aus Solardachziegeln 1 und herkömmlichen Dachziegeln 30 beispielsweise auch für denkmalgeschützte Gebäude verwendbar.

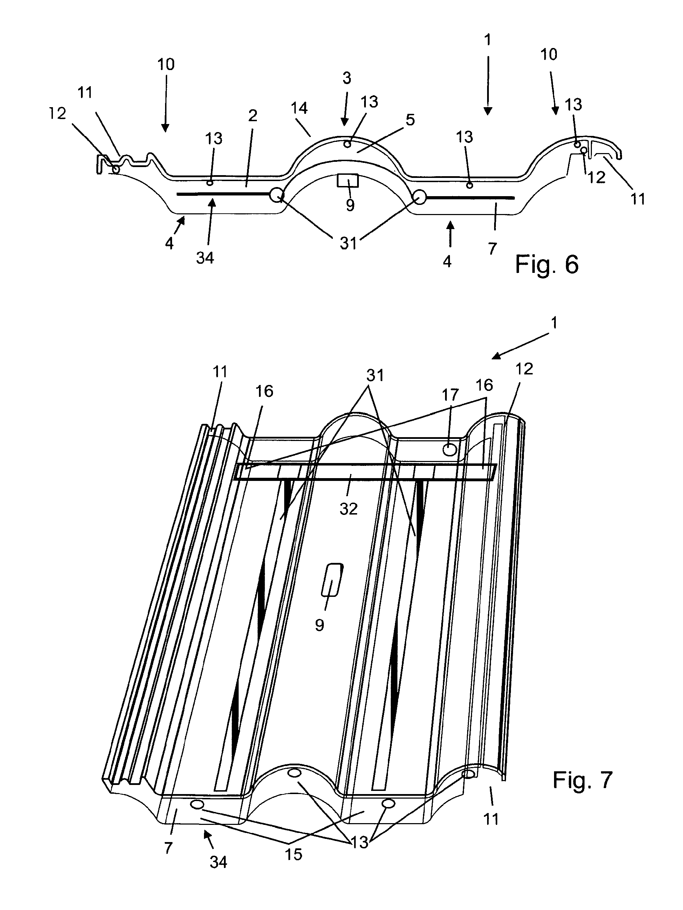

In den Fig. 6 und 7 ist ein zweites mögliches Ausführungsbeispiel für einen Solardachziegel 33 dargestellt. Dabei ist der Solardachziegel 33 in Fig. 6 in einer schematischen Querschnittsansicht dargestellt, wohingegen der Solardachziegel 33 in Fig. 7 in einer schematischen, perspektivischen Draufsicht gezeigt ist. Der Solardachziegel 33 weist in weiten Bereichen einen Aufbau auf, der dem Aufbau eines Solardachziegels 1 gemäß Fig. 1 bis 3 entspricht. Funktionsähnliche Teile sind daher mit identischen Bezugszeichen versehen.

Der wesentliche Unterschied zwischen dem Solardachziegel 1 gemäß der Fig. 1 bis 3 und dem vorliegend in den Fig. 6 und 7 dargestellten Solardachziegel 33 besteht darin, dass die thermische Solarkollektoreneinheit 34 insbesondere ein beschichtetes Blech 7 sowie vorliegend zwei Heat-Pipes 31 aufweist. Die Heat-Pipes 31 führen die vom beschichteten Blech 7 gesammelte Wärmeenergie einem im vorliegend dargestellten Ausführungsbeispiel quer verlaufenden Wasserrohr 32 zu. Das quer verlaufende Wasserrohr 32 weist an seinen beiden Enden Schlauchkupplungen 16 auf, so dass auch bei diesem Ausführungsbeispiel eines Solardachziegels 33 mehrere Solardachziegel 33 beispielsweise mit Hilfe von flexiblen Schläuchen 18 auf einfache Weise fluidisch miteinander verbunden werden können. Dank der jeweils zwischenliegend angeordneten flexiblen Schläuche 18 können Ausdehnungseffekte beziehungsweise Kontraktionseffekte (beispielsweise thermische Effekte) des Solardachziegels 33 (insbesondere von dessen querverlaufenden Wasserrohr 32) von den Schläuchen 18 aufgenommen werden. Da die Solardachziegel 33 in einer schrägen Anordnung auf einem Dachstuhl 35 aufgelegt werden, ist die für die Funktion der Heat-Pipes 31 erforderliche schräge Einbaulage der thermischen Solarkollektoreneinheit 34 in aller Regel ohne Weiteres gegeben.

Der vorliegend dargestellte Solardachziegel 33 kann analog zu dem in Fig. 1 und Fig. 2 dargestellten Solardachziegel 1 verlegt werden (vergleiche Fig. 3, 4 und 5).

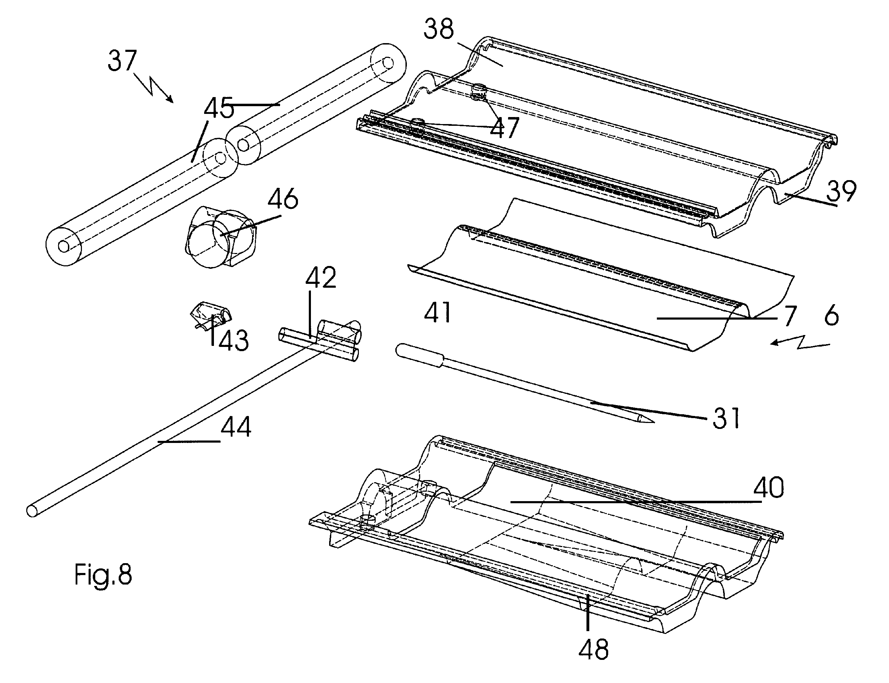

Schließlich ist in Fig. 8 noch ein drittes denkbares Ausführungsbeispiel eines Solardachziegels 37 in einer schematischen Explosionsansicht dargestellt. Der vorliegend dargestellte Solardachziegel 37 ist aus einer Mehrzahl von einzelnen Baugruppen zusammengesetzt.

Das Gehäuse des Solardachziegels 37 weist dabei eine Oberschale 38 auf, die aus einem transparenten, thermisch stabilen und UV-stabilen, schlagfesten Kunststoff gefertigt ist. Im vorliegend dargestellten Ausführungsbeispiel ist der Frontteil 39 der Oberschale 38 einstückig mit der Oberschale 38 ausgebildet. Auch der Frontteil 39 besteht vorliegend aus einem transparenten, thermisch stabilen und UV-stabilen, schlagfesten Kunststoff. Je nach konkretem Einsatzerfordernis ist es möglich, dass Oberschale 38 und Frontteil 39 mit dem gleichen oder mit einem unterschiedlichen Farbton versehen werden. Insbesondere kann - sofern eine Lichtquelle (in Fig. 8 nicht dargestellt) verwendet wird - dadurch einen gewünschter Farbeffekte erzielt werden. Die Oberschale 38 kann gemeinsam mit dem Frontteil 39 unter Verwendung eines Spritzgusssvorgangs (gegebenenfalls eines Mehrkomponenten-Spritzgussvorgangs) kostengünstig ausgebildet werden.

Das Unterteil 40 ist unter Verwendung einer wasserabweisenden, hoch wärmeisolierenden, porösen Masse ausgebildet. Beispielsweise kann hierzu ein Mineralschaum, ein Isolierschaum und/oder Presskork verwendet werden. Die wärmeisolierende Ausbildung des Unterteils verhindert einen "Verlust" von thermischer Energie, die vom Solardachziegel 37 aufgenommen wurde. Darüber hinaus wird dadurch eine (gegebenenfalls unerwünscht hohe) Erwärmung der Befestigungsstruktur des Solardachziegels 37 (beispielsweise ein Dachstuhl) sowie des darunter liegenden Raums (beispielsweise ein Dachboden) effektiv verhindert.

Die eigentliche Aufnahme der thermischen Energie erfolgt durch ein beschichtetes Blech 7 (siehe hierzu auch in die Beschreibung des in Fig. 1 und Fig. 2 gezeigten Solardachziegels. Die vom beschichteten Blech 7 "eingefangene" Wärmeenergie wird an die - vorliegend eine einzelne - Heat-Pipe 31 übertragen, die beispielsweise durch Schweißen mit dem beschichteten Blech 7 verbunden ist. Die von der Heat-Pipe 31 aufgenommene thermische Energie wird zum Kopfteil 41 der Heat-Pipe 31 befördert. Das Kopfteil 41 der Heat-Pipe 31 wiederum ist thermisch gut leitend mit einem ersten Wärmeübertragungselement 42 aus Metall verbunden. Das erste Wärmeübertragungselement 42 wiederum ist mit einem zweiten Wärmeübertragungselement 43, welches ebenfalls aus Metall gefertigt sein kann, thermisch gut leitend verbunden. Das zweite Wärmeübertragungselement 43 stellt dabei eine thermisch gut leitfähige Verbindung zum (fluiddurchströmten) Wellrohr 44 her. Zur Erhöhung des thermischen Wirkungsgrads sind das Wellrohr 44, sowie das erste und zweite Wärmeübertragungselement 42, 43 jeweils mit einem Wärmeisolationsschlauch 45 beziehungsweise einem Wärmeisolationelement 46 umgeben. Wärmeisolationsschlauch 45 und Wärmeisolationselement 46 können beispielsweise aus einem thermisch isolierenden Schaumstoffmaterial gefertigt werden.

Die einzelnen Baugruppen (Oberschale 38, Frontteil 39, Unterteil 40, Heat-Pipe 31 sowie die beiden Wärmeübertragungselemente 43, 44 werden zur Ausbildung des Solardachziegels 37 beispielsweise miteinander verklebt. Speziell das zweite Wärmeübertragungselement 44 reicht dabei ausreichend weit aus dem Unterteil 40 des Solardachziegels 37 hervor, so dass das (anfänglich) separat vom Solardachziegel 37 ausgebildete Wellrohr 44 noch nachträglich mit dem Solardachziegel 37 verbunden werden kann. Die thermische und mechanische Verbindung von Wellrohr 44 und Solardachziegel 37 erfolgt dabei primär mittels des zweiten Warmübertragungselements 42 (wobei es möglich ist erforderlichenfalls noch zusätzliche Befestigungsmittel vorzusehen). Speziell das zweite Wärmeübertragungselement 42 ist vorzugsweise derart ausgebildet, dass Solardachziegel 37 und Wellrohr 44 auf einfache Weise (reversibel) miteinander verbunden und gegebenenfalls auch wieder voneinander getrennt werden können.

Dadurch ist es beispielsweise möglich, dass das Wellrohr 44 unabhängig von der Verlegung (beispielsweise vorab beziehungsweise im Anschluss daran) des Solardachziegels 37 montiert werden kann. Auch eine Reparatur durch den Austausch einzelner Solardachziegel 37 wird dadurch besonders leicht möglich. Insbesondere ist es bei einem Austausch eines Solardachziegels 37 nicht erforderlich, dass Wärmeübertragungsfluid abzulassen und anschließend neu einzufüllen.

Weiterhin weist das Wellrohr 44 gemäß dem dargestellten Ausführungsbeispiel eine relativ große Länge auf, insbesondere derart, dass es sich über eine größere Anzahl von Solardachziegeln 37 (beispielsweise über einen kompletten Solarkollektorenstrang 21) hinweg erstreckt, und diese fluidisch miteinander verbindet. Durch sind deutlich weniger (fluiddicht auszuführende) Verbindungen einzelner Schlauchelemente miteinander durchzuführen. Dies kann die Verlegung der Solardachziegel 37 deutlich vereinfachen. Darüber hinaus kann dadurch das Risiko von Fluidleckagen verringert werden.

Aufgrund der Eigenschaften von Wellrohren 44 können diese gegebenenfalls auftretende Längendifferenzen gut aufnehmen. Derartige Längendifferenzen können beispielsweise durch thermische Ausdehnungseffekte beziehungsweise thermische Kontraktionseffekte auftreten. Auch können Bewegungen der Haltevorrichtung dadurch gut ausgeglichen werden. Werden beispielsweise Solardachziegel 37 auf einem Dachstuhl aus Holz verlegt, so müssen die durch das "Arbeiten des Holzes" bedingten Bewegung ausgeglichen werden, was dank der Wellrohre 44 ohne weiteres gelingt.

Schließlich sind in Fig. 8 beim Solardachziegel 37 Rundteile 47 zu erkennen. Die Rundteile 47 weisen jeweils eine mittige Bohrung auf. Dadurch ist es möglich, den Solardachziegel 37 mithilfe einer geeigneten Schraube auf der darunter liegenden Dachlatte zu befestigen. Das Rundteil 47 ist im vorliegenden Ausführungsbeispiel so ausgeführt, dass die Schraube den Solardachziegel 37 nicht verdrücken oder verziehen kann. Der obere Teil des Rundteils 47 ist so abgesetzt, dass es sich in die dafür vorgesehenen Nuten 48 im dazu korrespondierenden Bereich des Unterteils 40 eines benachbarten Solardachziegels 37 (oder auch eines normalen Dachziegels) einfügt. Die Verbindung erfolgt bei der Montage der einzelnen Solardachziegel 37 miteinander, indem der darüber liegende Solardachziegel 37 vor der Befestigung mit dem Rundteil 47 mit der Nut 48 in den darunterliegenden Rundteil 47 eingeführt wird. Dadurch kann bei Bedarf ein besonders hoher Befestigungsgrad der Solardachziegel 37 erzielt werden.

Im übrigen ist es auch möglich, dass einzelne oder mehrere Merkmale, die im Zusammenhang mit den beschriebenen Ausführungsbeispielen genannt sind, auch mit anderen Ausführungsbeispielen kombiniert werden.

### Bezugszeichenliste

- 1: Solardachziegel
- 2: Grundkörper
- 3: Oberseite
- 4: Unterseite
- 5: Hohlraum
- 6: Thermische Solarkollekto- reneinheit
- 7: Beschichtetes Blech
- 8: Wasserleitung
- 9: Rückschlagventil
- 10: Seitenbereich
- 11: Wasserfalz
- 12: Dichtungsband
- 13: Leuchtmittel
- 14: Wölbungsbereich
- 15: Endbereich
- 16: Schlauchkupplung
- 17: Elektrischer Stecker
- 18: Flexibler Schlauch
- 19: Verlegeanordnung
- 20: Vorlaufleitung
- 21: Solarkollektorenstrang
- 22: Temperatursensor
- 23: Zweiwegeventil
- 24: Rücklaufleitung
- 25: Kurzschlussleitung
- 26: Wasserpumpe
- 27: Haus
- 28: Dach
- 29: Dachziegel
- 30: Herkömmliche Dachziegel
- 31: Heat-Pipe
- 32: Wasserrohr
- 33: Solardachziegel
- 34: Thermische Solarkollekto- reneinheit
- 35: Dachstuhl
- 36: Steckkontakt
- 37: Solardachziegel
- 38: Oberschale
- 39: Frontteil
- 40: Unterteil
- 41: Kopfteil
- 42: erstes Wärmeübertra- gungselement
- 43: zweites Wärmeübertra- gungselement
- 44: Wellrohr
- 45: Wärmeisolationsschlauch
- 46: Wärmeisolationselement
- 47: Rundteil
- 48: Nut

## Patentansprüche

1. Abdeckelement (1, 33, 37) für ein Abdecksystem (19), bei dem eine Fläche (28) durch eine Mehrzahl von einzelnen Abdeckelementen (1, 33, 37) und/oder Basis-Abdeckelementen (30) abgedeckt wird, wobei ein einzelnes Abdeckelement (1, 33, 37) einen Abdeckumriss aufweist, welcher dem Abdeckumriss eines einzelnen BasisAbdeckelements (30) und/oder dem Abdeckumriss einer Mehrzahl in Abdeckanordnung angeordneter Basis-Abdeckelemente (30) entspricht, **dadurch gekennzeichnet, dass** das Abdeckelement (1, 33, 37) zumindest eine Lichtempfangseinrichtung (6, 34) aufweist.

2. Abdeckelement (1, 33, 37) nach Anspruch 1, **dadurch gekennzeichnet, das** zumindest eine Lichtempfangseinrichtung (6, 34) als thermische Solarkollektoreneinrichtung (6, 34) ausgebildet ist und insbesondere zumindest eine Heat-Pipe-Einrichtung (31) aufweist, besonders bevorzugt zumindest eine Heat-Pipe-Einrichtung (31), zumindest eine Fluidleitungseinrichtung (8, 45), speziell zumindest eine längenvariable Fluidleitungseinrichtung (45) und/oder zumindest eine Lichtabsorptionseinrichtung (7) aufweist.

3. Abdeckelement (1, 33, 37) nach Anspruch 1 oder 2, **gekennzeichnet durch** zumindest eine Wärmeübertragungseinrichtung (42, 43), insbesondere **gekennzeichnet durch** zumindest eine eine Wärmeübertragungseinrichtung (42, 43) zur Wärmeübertragung von zumindest einer Heat-Pipe-Einrichtung (31) zu zumindest einer Fluidleitungseinrichtung (8, 45).

4. Abdeckelement (1, 33, 37) nach einem der vorangehenden Ansprüche, insbesondere nach Anspruch 3, **gekennzeichnet durch** eine Fluidleitungsaufnahmeeinrichtung (43), welche bevorzugt mit zumindest einer Wärmeübertragungseinrichtung (42) zusammenwirkt und/oder gemeinsam mit einer Wärmeübertragungseinrichtung (42) ausgebildet ist.

5. Abdeckelement (1, 33, 37) nach einem der vorangehenden Ansprüche, **dadurch gekennzeichnet, dass** zumindest eine Lichtempfangseinrichtung (6, 34) als Photovoltaikeinrichtung, insbesondere als substratartige Photovoltaikeinrichtung und/oder als Dünnschicht-Photovoltaikeinrichtung und/oder zumindest eine Lichtsendeeinrichtung (13) vorgesehen ist, die bevorzugt als aktive Lichtsendeeinrichtung (13), wie insbesondere als Lampeneinrichtung und/oder als LED-Einrichtung (13) ausgebildet ist.

6. Abdeckelement (1, 33, 37) nach einem der vorangehenden Ansprüche, **dadurch gekennzeichnet, dass** das Abdeckelement (1, 33, 37) mehrere Baugruppen, insbesondere mehrere Gehäusebaugruppen aufweist, besonders bevorzugt zumindest eine Oberschaleneinrichtung (38), zumindest eine Mittelteileinrichtung (6), zumindest eine Seitenteileinrichtung (39) und/oder zumindest eine Unterschaleneinrichtung (40) aufweist.

7. Abdeckelement (1, 33, 37) nach einem der vorangehenden Ansprüche, **dadurch gekennzeichnet, dass** es zumindest teilweise ein Material aufweist, welches der Gruppe entnommen ist, die transparente Materialien, durchsichtige Materialien, Kunststoffe, RecyclingMaterialien, Makrolon, Isolationsmaterialien, Neopren, Vliesmaterialien, Glasgewebe, Glas, Farbstoffe, Kupfer, Kupferlegierungen, Eisen, Eisenlegierungen, Stahl, Edelstahl, Aluminium, Aluminiumlegierungen, wärmeisolierende Materialien, Presskork, Mineralschaum, Isolierschaum, Aerogele und/oder Nano-Aerogele umfasst.

8. Abdeckelement (1, 33, 37) nach einem der vorangehenden Ansprüche, **gekennzeichnet durch** zumindest ein Schnellverbindungselement (16, 17, 43, 47), insbesondere **durch** zumindest ein fluidisches Schnellverbindungselement (16), **durch** zumindest ein mechanisches Schnellverbindungselement (47), **durch** zumindest eine thermisches Schnellverbindungselement (43, 47) und/oder **durch** zumindest ein elektrisches Schnellverbindungselement (17).

9. Abdeckelement (1, 33, 37) nach einem der vorangehenden Ansprüche, **gekennzeichnet durch** zumindest eine temperaturempfindliche Einrichtung (22, 23), insbesondere **durch** zumindest eine temperaturempfindliche Fluidbeeinflussungseinrichtung (22, 23).

10. Abdeckelement (1, 33, 37) nach einem der vorangehenden Ansprüche, **dadurch gekennzeichnet, dass** zumindest eine zusätzliche Einrichtung, wie insbesondere eine Lichtempfangseinrichtung (6, 7, 34), eine Lichtsendeeinrichtung (13), eine Fluidleitungseinrichtung (8, 32, 45), eine Heat-Pipe-Einrichtung (31), eine Wärmeübertragungseinrichtung (42, 43), eine elektrische Leiteinrichtung (17) und/oder eine Verbindungseinrichtung (16, 17) zumindest bereichsweise in einer Ausnehmung (5) des Abdeckelements (1, 33, 37) angeordnet sind, wobei vorzugsweise die Ausnehmung (5) nach Aufnahme der zusätzlichen Einrichtung(en) zumindest bereichsweise verschlossen wird.

11. Abdeckelement (1, 33, 37) nach einem der vorangehenden Ansprüche, welches zumindest bereichsweise als Dachabdeckelement (29, 30), insbesondere als Dachziegel (29, 30) und/oder zumindest bereichsweise als Wandabdeckelement, insbesondere als Schindel ausgebildet ist.

12. Abdeckelement (1, 33, 37) nach einem der vorangehenden Ansprüche, **dadurch gekennzeichnet, dass** zumindest bereichsweise kondensationsmindernde Einrichtungen (9) vorgesehen sind, insbesondere kondensationsmindernde Einrichtungen, welche auf Innenraumbereiche (5) des Abdeckelements (1, 33, 37) einwirken.

13. Abdecksystem (19), aufweisend zumindest ein Abdeckelement (1, 33, 37) sowie gegebenenfalls zumindest ein Basis-Abdeckelement (30) gemäß einem der Ansprüche 1 bis 12.

14. Abdecksystem (19) nach Anspruch 13, mit einer Mehrzahl von Abdeckelementen (1, 33, 37), **dadurch gekennzeichnet, das** zumindest ein Teil der Abdeckelemente (1, 33, 37) fluidisch und/oder elektrisch miteinander gekoppelt sind, insbesondere zumindest teilweise seriell und/oder zumindest teilweise parallel miteinander gekoppelt sind.

15. Abdecksystem (19) nach Anspruch 13 oder 14, insbesondere nach Anspruch 14, **gekennzeichnet durch** zumindest eine Fluidleitungseinrichtung (8, 16, 44), insbesondere **durch** zumindest eine längenvariable Fluidleitungseinrichtung (44) wie beispielsweise eine zumindest abschnittsweise als Wellrohreinrichtung (44) ausgebildete Fluidleitungseinrichtung, welche sich bevorzugt über eine Mehrzahl von Abdeckelementen (1, 33, 37) erstreckt.
